# EUROPEAN PATENT APPLICATION

(11) **EP 3 805 102 A1**
(43) Date of publication of application: **14.04.2021**
(21) Application number: 19810191.7
(22) Date of filing: 29.05.2019
(51) Int. Cl.: B64D 11/02, A47K 4/00, E04H 1/12

(54) **FLOOR STRUCTURE FOR AIRCRAFT LAVATORY COMPARTMENT UNIT**

(30) Priority: 31.05.2018 JP 2018105468
(71) Applicant: The Yokohama Rubber Co., Ltd., Tokyo 105-8685 (JP)
(72) Inventor: MURAYAMA, Hiroshi, Hiratsuka-shi, Kanagawa 254-8601 (JP)
(74) Representative: Dilg, Haeusler, Schindelmann Patentanwaltsgesellschaft mbH
(86) International application number: PCT/JP2019/021359
(87) International publication number: WO 2019/230828

(57) **Abstract**

Provided is a floor structure for an aircraft lavatory unit in which the floor is less likely to get wet and which is advantageous in maintaining a hygienically and aesthetically preferable state of the floor. A floor pan (24A) disposed on a bottom wall (1202) of a structural frame (12) of an aircraft lavatory unit (10) to form a floor (1402) of a lavatory (14) includes a lower bottom plate (2602) placed on the bottom wall (1202), a supporting wall (2612) projecting from the lower bottom plate (2602), a plurality of receiving chambers (2614) formed on the lower bottom plate (2602) by the supporting wall (2612), and an upper bottom plate (2610) placed on the supporting wall (2612) so as to be opened and closed with respect to the plurality of receiving chambers (2614) to form the floor (1402) of the lavatory (14). A plurality of water-absorbing members (28) is provided so as to be removably received in the plurality of receiving chambers (2614), respectively. A water guiding inner portion (32) is provided in the upper bottom plate (2610) so as to guide water scattering on the upper bottom plate (2610) toward the plurality of receiving chambers (2614).

## Description

### Technical Field

The present invention relates to a floor structure for an aircraft lavatory unit.

### Background Art

An aircraft lavatory unit includes a structural frame which has a bottom wall, a front wall rising from the bottom wall, a rear wall, and a pair of side walls such that the inside forms a lavatory.

In addition, a toilet bowl is disposed on a section of the bottom wall near the rear wall in the lavatory, and a sink is disposed along one side wall.

The sink includes a counter table, a washbowl provided on an upper surface of the counter table, and a faucet.

A lower portion of the counter tail serves as a lower storage portion, and an upper portion of the counter table serves as an upper storage portion.

In addition, a floor pan that forms the floor of the lavatory is disposed in a section of the bottom wall on a front side of the toilet bowl close to the front wall and on a lateral side of the lower storage portion close to the other side wall.

In recent years, a phenomenon where the floor of the lavatory gets wet due to use of the toilet bowl or sink occurs frequently depending on the air route.

### Citation List

### Patent Document

Patent Document 1: WO 2014/141701

### Summary of Invention

### Technical Problem

A wet floor is not preferable in terms of hygiene and aesthetics. Therefore, a cabin crew member needs to frequently wipe up the water on the floor using a paper towel or the like, and some improvement is required.

The present invention has been devised in view of the above circumstances, and an object of the present invention is to provide a floor structure for an aircraft lavatory unit in which the floor is less likely to get wet and which is advantageous in maintaining a hygienically and aesthetically preferable state of the floor.

### Solution to Problem

In order to attain the above object, the present invention provides a floor structure for an aircraft lavatory unit including a floor pan disposed on a bottom wall of a structural frame of the aircraft lavatory unit to form a floor of a lavatory, the floor pan including: a lower bottom plate placed on the bottom wall; an upper bottom plate located above the lower bottom plate, the upper bottom plate configured to form the floor of the lavatory; a supporting wall projecting from at least one of the lower bottom plate and the upper bottom plate, the supporting wall configured to support the upper bottom plate on the lower bottom plate; and a plurality of receiving chambers formed on the lower bottom plate by the supporting wall, the plurality of receiving chambers configured to be opened and closed by the upper bottom plate, a water-absorbing member being provided so as to be removably received in each of the plurality of receiving chambers, and a water guiding inner portion being provided in the upper bottom plate so as to guide water scattering on the upper bottom plate toward the plurality of receiving chambers.

In the present invention, the plurality of receiving chambers may have an elongated shape and are arranged so that longitudinal directions thereof are parallel to each other.

In the present invention, the supporting wall may be formed as a plurality of protrusion portions provided at intervals on the lower bottom plate or the upper bottom plate so as to project and extend in parallel, and the plurality of receiving chambers may be formed into an elongated shape between adjacent sets of the plurality of protrusion portions.

In the present invention, the supporting wall may be formed as a plurality of projection portions including rows provided at intervals on the lower bottom plate or the upper bottom plate so as to project and extend in parallel, and the plurality of receiving chambers may be formed into an elongated shape between adjacent sets of the rows.

In the present invention, the supporting wall may be formed as a single protrusion portion formed so as to extend on the lower bottom plate or the upper bottom plate, the single protrusion portion may include linear portions parallel to each other and connection portions configured to connect end portions of the linear portions, and the plurality of receiving chambers may be formed into an elongated shape between adjacent sets of the linear portions.

In the present invention, the structural frame may have a plurality of wall plates rising from the bottom wall, a sink may be disposed against a first wall plate of the plurality of wall plates and a toilet bowl is disposed against an intermediate portion in a width direction of a second wall plate of the plurality of wall plates, and when viewed in a plan view, the plurality of receiving chambers may be arranged at intervals in a direction toward and away from the first wall plate on which the sink is disposed so as to extend linearly in parallel to the first wall plate on which the sink is disposed, or may be arranged at intervals in a direction toward and away from the second wall plate on which the toilet bowl is disposed so as to extend linearly in parallel to the second wall plate on which the toilet bowl is disposed.

In the present invention, a plurality of the upper bottom plates may be provided so as to be divided for adjacent sets of the plurality of receiving chambers, and when viewed in a plan view, the plurality of upper bottom plates may have such an elongated shape as to be arranged in a direction toward and away from the first wall plate on which the sink is disposed to extend linearly in parallel to the first wall plate on which the sink is disposed, or may have such an elongated shape as to be arranged in a direction toward and away from the second wall plate on which the toilet bowl is disposed to extend linearly in parallel to the second wall plate on which the toilet bowl is disposed.

In the present invention, a missing portion on which to hook a finger may be provided in an end portion in a longitudinal direction of each of the plurality of upper bottom plates.

In the present invention, a plurality of the water-absorbing members may be provided so as to be removably received in the plurality of receiving chambers, respectively.

In the present invention, a single water-absorbing member may be provided, and a portion of the water-absorbing member may be received in each of the plurality of receiving chambers.

In the present invention, the water-absorbing member may contain an antibacterial agent or a fragrance agent.

### Advantageous Effects of Invention

According to the present invention, when water scatters on the upper surface of the upper bottom plate of the floor pan, the water scattering on the water guiding inner portion in the upper surface of the upper bottom plate is guided toward the water guiding inner portion to flow from the receiving chamber to the water-absorbing member and is absorbed by the water-absorbing member.

Furthermore, when the water scattering on a section of the upper surface of the upper bottom plate between adjacent sets of water guiding inner portions joins to form a puddle of water having a certain volume to reach the water guiding inner portion, the water is guided to the water guiding inner portion and flows from the receiving chamber to the water-absorbing member and is absorbed by the water-absorbing member.

Therefore, because a majority of the water scattering on the upper surface of the upper bottom plate of the floor pan is absorbed by the water-absorbing member via the water guiding inner portion, the amount of water remaining on the upper surface of the upper bottom plate of the floor pan is small, and the water evaporates from the upper surface of the upper bottom plate in a short period of time.

Therefore, even if the upper surface of the upper bottom plate gets wet with scattered water due to hand washing or the like, the wet state disappears in a short period of time, and this is advantageous in maintaining the lavatory in a hygienically and aesthetically preferable state.

In addition, the frequency at which a cabin crew member needs to wipe up water on the floor of the lavatory using a paper towel or the like is reduced, which is advantageous in simplifying cleaning work.

In addition, replacing the water-absorbing member that has absorbed water is achieved by a simple operation of opening the upper bottom plate, or detaching the upper bottom plate, grasping and removing the water-absorbing member from the receiving chamber, and inserting a new water-absorbing member into the receiving chamber, which is advantageous in simplifying the maintenance operation of the lavatory.

In addition, when the plurality of receiving chambers has an elongated shape, it is possible to reduce the number of water-absorbing members by forming the water-absorbing member into an elongated shape, which is advantageous for easily replacing the water-absorbing member.

In addition, the supporting wall that partitions the plurality of receiving chambers can be easily formed as a plurality of protrusion portions, a plurality of projection portions forming rows, or a single protrusion portion.

When the plurality of receiving chambers are arranged at intervals in a direction toward and away from the wall plate against which the sink is disposed and the wall plate against which the toilet bowl is disposed so as to extend linearly in parallel to the wall plates in a plan view, predicting the section where scattering water falls more frequently and the section where scattering water falls less frequently is advantageous in simplifying the maintenance operation of the lavatory.

In addition, when a plurality of upper bottom plates are provided in a divided manner, a plurality of water-absorbing members can be replaced whenever one upper bottom plate is opened, which is advantageous in simplifying the maintenance operation of the lavatory.

In this case, when the missing portion on which to hook a finger is provided in an end portion in the longitudinal direction of each of the plurality of upper bottom plates, the upper bottom plate can be easily opened and closed, which is advantageous in simplifying the maintenance operation of the lavatory.

In the present invention, a plurality of water-absorbing members or a single water-absorbing member may be provided for respective receiving chambers.

In addition, providing the water-absorbing member with an antibacterial agent or a fragrance agent is advantageous in suppressing odor and ensuring hygiene of the lavatory.

### Brief Description of Drawings

FIG. 1 is a perspective view illustrating a state in which one side wall and a door are omitted from an aircraft lavatory unit according to a first embodiment.
FIG. 2 is a perspective view of a floor pan in which a plurality of water-absorbing members is disposed.
FIG. 3 is an enlarged perspective view of a portion of an open/close operation unit.
FIG. 4 is a perspective view of a floor pan from which all upper bottom plates are detached.
FIG. 5 is an enlarged perspective view of the portions of a supporting wall, a receiving portion, and a water-absorbing member from which upper bottom plates are detached.
FIG. 6 is a perspective view of a floor pan from which one upper bottom plate is detached.
FIG. 7 is an explanatory diagram of a second embodiment and is a perspective view of a floor pan from which all upper bottom plates are detached.
FIG. 8 is an enlarged perspective view of the portions of a supporting wall, a receiving portion, and a water-absorbing member from which upper bottom plates are detached.
FIG. 9 is an explanatory diagram of a third embodiment and is a perspective view illustrating a state in which one side wall and a door are omitted from an aircraft lavatory unit.
FIG. 10 is a schematic plan view of a floor pan from which all upper bottom plates are detached.
FIG. 11 is an enlarged plan view illustrating a main portion of FIG. 10.
FIG. 12 is an explanatory view of a fourth embodiment, where FIG. 12(A) is a view in which an upper bottom plate including a supporting wall is positioned above a lower bottom plate on which a plurality of water-absorbing members are disposed, and FIG. 12(B) is a view in which a lower edge of the supporting wall is placed on the lower bottom plate, and the water-absorbing members are removably received in a receiving chamber between adjacent sets of supporting walls.
FIG. 13 is an explanatory view of a fifth embodiment, where FIG. 13(A) is a view in which an upper bottom plate including a supporting wall is positioned above a lower bottom plate on which one water-absorbing member is disposed, and FIG. 13(B) is a view in which a lower edge of the supporting wall is placed on the lower bottom plate with the water-absorbing member disposed therebetween, and the portion of the water-absorbing member is disposed in a receiving chamber between adjacent sets of supporting walls.

### Description of Embodiments

Next, an embodiment of the present invention will be described with reference to the drawings.

### First Embodiment

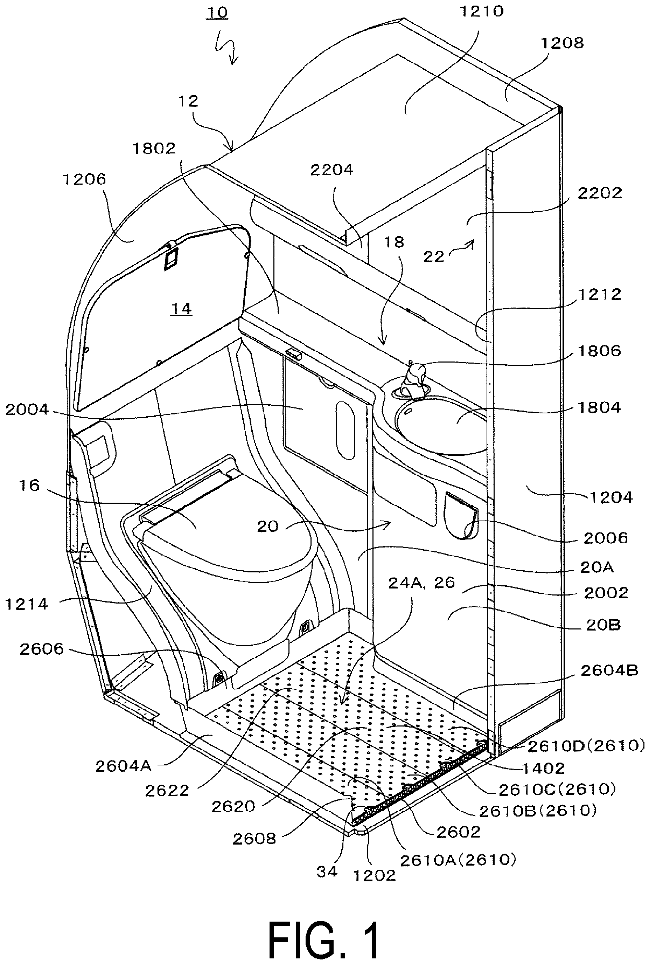

As illustrated in FIG. 1, an aircraft lavatory unit 10 includes a structural frame 12 which has a bottom wall 1202, a plurality of wall plates rising from the bottom wall 1202, and a ceiling 1210, to thereby form a lavatory 14 therein.

In the present embodiment, one of the plurality of wall plates is a front wall 1204, one is a rear wall 1206 facing the front wall 1204, and the remaining two walls are a pair of side walls 1208 that connect both sides of the rear wall 1206 and both sides of the front wall 1204, and thus, four wall plates are provided.

In the present embodiment, an entrance 1212 is provided in the front wall 1204, an inner wall 1214 is provided in front of the rear wall 1206, and a toilet bowl 16 is provided on the floor plate 1202 through the inner wall 1214.

Further, a sink 18 is provided on one side wall 1208.

Note that there may be a case in which the sink 18 is provided on one side wall 1208 and the entrance 1212 is provided on the other side wall 1208, and a case in which the entrance 1212 is provided on one side wall 1208 and the sink 18 is provided on the front wall 1204. The layout in the lavatory 14 is not limited to the structure illustrated in FIG. 1, and the lavatory 14 may have various shapes in a plan view and the number of wall plates is not limited to four.

The sink 18 includes a counter table 1802, a washbowl 1804 provided in the counter table 1802, and a faucet 1806, and the sink 18 extends along one side wall 1208 on the lateral side of the toilet bowl 16.

A lower storage portion 20 for storing a trash can device with a fire extinguishing function, equipment of the lavatory 14, and the like is provided below the sink 18. The lower storage portion 20 can be opened and closed by a plurality of doors 2002, 2004, and the reference sign 2006 in FIG. 1 indicates a trash input port.

An upper storage portion 22 for storing equipment of the lavatory 14 such as tissue paper is provided above the sink 18. The upper storage portion 22 is opened and closed by a plurality of doors 2202, 2204 provided with mirrors.

A floor pan 24A is disposed in a section of the bottom wall 1202 on a front side (the side close to the front wall 1204) of the toilet bowl 16 and a lateral side (the side close to the other side wall 1208) of the lower storage portion 20. The floor pan 24A forms a floor 1402 of the lavatory 14.

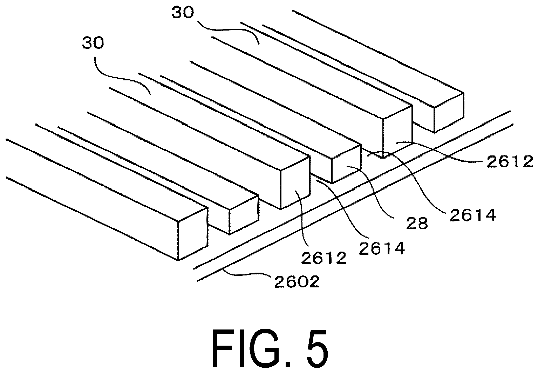

As illustrated in FIGS. 1 to 6, the floor pan 24A includes a floor pan body 26, and a water-absorbing member 28 is disposed in the floor pan body 26.

The floor pan body 26 includes a lower bottom plate 2602, a pair of side plates 2604A, 2604B, a rear plate 2606, a front plate 2608, an upper bottom plate 2610, a supporting wall 2612, and a receiving chamber 2614. The lower bottom plate 2602, the pair of side plates 2604A, 2604B, the rear plate 2606, the front plate 2608, and the supporting wall 2612 are integrally formed, and the upper bottom plate 2610 is formed as another member.

Note that the structural frame 12 and the floor pan body 26 are both made from a synthetic resin, but the floor pan body 26 may be made from a lightweight, rigid metal.

The lower bottom plate 2602 is a section placed on the bottom wall 1202 of the structural frame 12.

The pair of side plates 2604A, 2604B rises from an edge of the lower bottom plate 2602 near the pair of side walls 1208 of the structural frame 12.

The rear plate 2606 rises from an edge of the lower bottom plate 2602 near the inner wall 1214 of the structural frame 12 and is provided with a receiving chamber 2606A provided at a center portion in the extension direction of the rear plate 2606 so as to receive a lower portion of the toilet bowl 16.

The front plate 2608 rises from an edge of the lower bottom plate 2602 near the entrance 1212 of the structural frame 12.

Although the front plate 2608 rises from the edge near the entrance 1212, a greater part of the front plate 2608 is notched along the contour of the entrance 1212 of the structural frame 12, such that the front plate 2608 is located only at an end portion in the width direction of the entrance 1212.

Note that, as illustrated in FIG. 1, a section of the counter table 1802 in which the washbowl 1804 is provided projects further into the lavatory 14 than a section of the counter table 1802 near the rear wall 1206. Correspondingly, a section 20B of the lower storage portion 20 below the washbowl 1804 projects further into the lavatory 14 than a section 20A of the lower storage portion 20 near the rear wall 1206.

As a result, the section of the floor pan body 26 close to the lower storage portion 20 is formed into a shape conforming to the contour of the lower storage portion 20.

Specifically, when the direction in which the pair of side plates 2604A, 2604B are connected is the width direction of the floor pan body 26 and the floor pan 24A is viewed in a plan view, a small-width portion 2620 having a small dimension in the width direction is formed in the section 20B of the lower storage portion 20 below the washbowl 1804, and a large-width portion 2622 having a large dimension in the width direction is formed in the section 20A closer to the rear wall 1206 than the lower storage portion 20 below the washbowl 1804.

When the floor pan 24A is viewed in a plan view, the edge of the lower bottom plate 2602 near the side wall 1208 on the side opposite the sink 18 and the side plate 2604A on the side opposite the sink 18 extend linearly, and the edge of the lower bottom plate 2602 near the side wall 1208 close to the sink 18 and the side plate 2604B close to the sink 18 are curved at a section at the boundary between the small-width portion 2620 and the large-width portion 2622.

In addition, as illustrated in FIG. 1, the washbowl 1804 is positioned above the end portion in the width direction of the small-width portion 2620, and the toilet bowl 16 is positioned above the longitudinal end portion of the floor pan body 26 when the direction in which the edge of the lower bottom plate 2602 near the inner wall 1214 and the edge of the lower bottom plate 2602 near the entrance 1212 are connected is the longitudinal direction of the floor pan body 26.

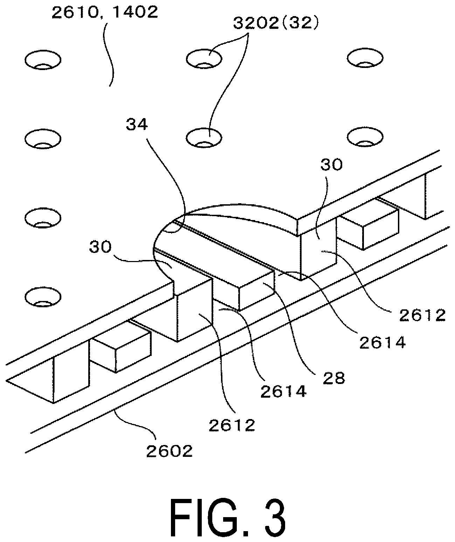

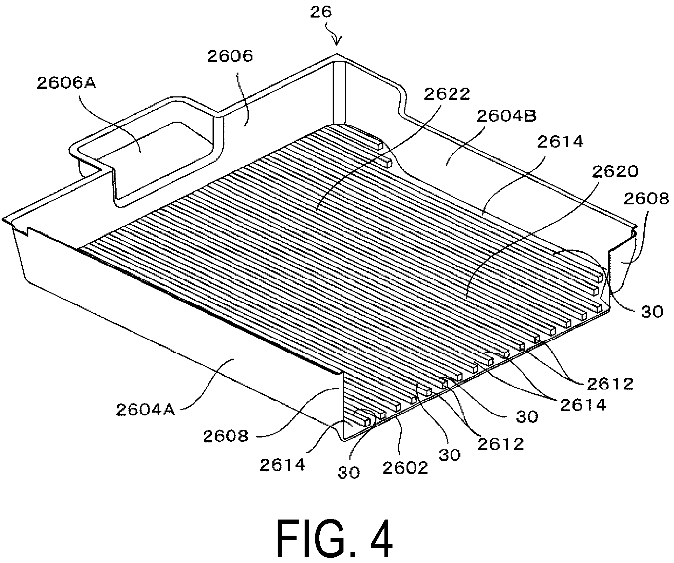

As illustrated in FIGS. 3 and 4, the supporting walls 2612 are formed as a plurality of protrusion portions 30 that are provided at intervals from each other in the lower bottom plate 2602 so as to project and extend in parallel to each other.

When viewed in a plan view, the protrusion portions 30 extend linearly in parallel to the side wall 1208 spaced apart at intervals in a direction toward and away from the side wall 1208 of the structural frame 12 on the side where the sink 18 is provided.

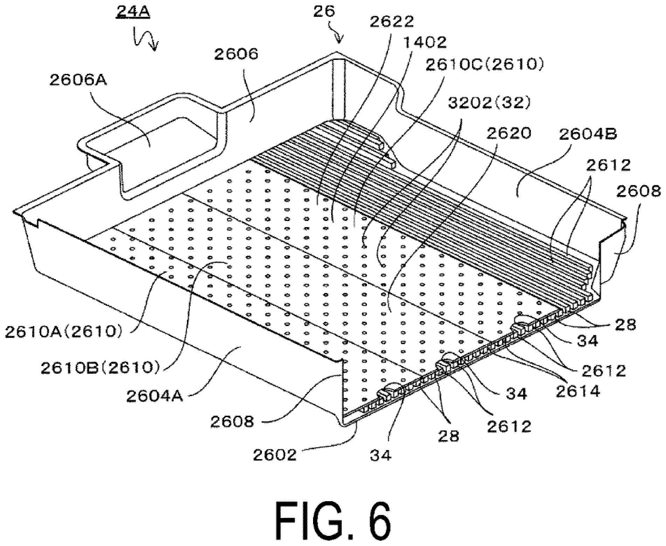

Each of the protrusion portions 30 has a rectangular cross-section, and is formed with a constant width and a constant height. As illustrated in FIGS. 4 and 6, the lengths of the protrusion portion 30, the receiving chamber 2614, and the water-absorbing member 28 described below at the end portion of the large-width portion 2622 are formed smaller than that of the other sections.

Note that the width of each protrusion portion 30 and the interval between the plurality of protrusion portions 30 are dimensioned such that the upper bottom plate 2610 can be supported without being deformed when the upper bottom plate 2610 is placed on the protrusion portions 30 and a user stands on the upper bottom plate 2610.

A plurality of the receiving chambers 2614 are formed on the lower bottom plate 2602 between adjacent sets of protrusion portions 30 in an elongated shape so as to extend linearly, and the upper portion thereof is open. Specifically, in a section near the pair of side plates 2604A, 2604B, each receiving chamber 2614 is formed between the pair of side plates 2604A, 2604B and the protrusion portion 30 facing the pair of side plates 2604A, 2604B.

In the present embodiment, when viewed in a plan view, the plurality of receiving chambers 2614 extends linearly in parallel to the side wall 1208 arranged at intervals in a direction toward and away from the side wall 1208 on which the sink 18 is provided.

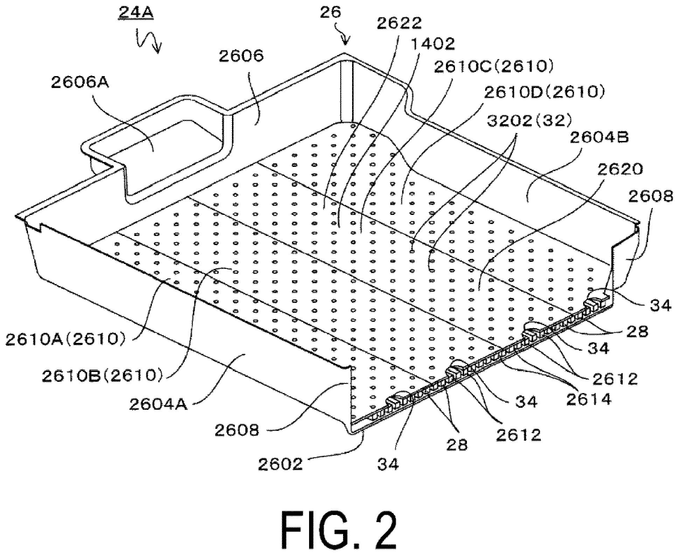

As illustrated in FIGS. 2, 3, 5, and 6, a plurality of the water-absorbing members 28 are provided in an elongated shape so as to be removably received in each elongated receiving chambers 2614.

Each water-absorbing member 28 is formed in a cross-section corresponding to the cross-section of each receiving chamber 2614, and thus, the cross-section is rectangular and is elongated.

In the present embodiment, the water-absorbing member 28 before absorbing water has a height that is sufficiently smaller than the height of the supporting wall 2612, ensuring that the water-absorbing member 28 absorbs a large amount of water.

As the water-absorbing member 28, for example, various known water-absorbing sheets having water absorbing properties such as water-absorbing polymers can be used.

Additionally, when an antibacterial water-absorbing sheet containing an antibacterial agent or a disinfectant water-absorbing sheet containing a disinfectant is used as the water-absorbing member 28, it is possible to suppress the growth of unwanted bacteria in the absorbed water. Therefore, this configuration is advantageous in suppressing odor and ensuring the hygiene of the lavatory 14, making it possible to impart a more hygienic function.

In addition, using a fragrant water-absorbing sheet containing a fragrance agent as the water-absorbing member 28 is advantageous in suppressing odor and ensuring the hygiene of the lavatory 14, making it possible to impart a more hygienic function.

As illustrated in FIGS. 2, 3, and 6, the upper bottom plate 2610 is placed on the supporting wall 2612 and is positioned in a section separated above the lower bottom plate 2602 to form the floor 1402 of the lavatory 14.

In other words, the upper bottom plate 2610 conceals the plurality of supporting walls 2612, the receiving chambers 2614, and the water-absorbing members 28 to form the floor 1402 of the lavatory 14.

A plurality of water guiding inner portions 32 that guide water scattered on the upper bottom plate 2610 to the receiving chambers 2614 is provided substantially in the entire region of the upper bottom plate 2610.

In the present embodiment, each water-guiding portion 32 is formed as a circular hole 3202 formed penetrating the upper bottom plate 2610.

When viewed in a plan view, the opening of the hole 3202 located in the bottom surface of the upper bottom plate 2610 placed on the supporting wall 2612 is provided so as to cut into the inner contour of the receiving chamber 2614, and the water scattered on the upper bottom plate 2610 is smoothly absorbed by the water-absorbing member 28.

Note that the shape of the water guiding inner portion 32 is not limited to the hole 3202, and may be a groove or the like. In other words, it is sufficient that the structure can guide the water scattered on the upper bottom plate 2610 into the receiving chamber 2614.

The upper bottom plate 2610 is placed on the supporting wall 2612 so as to be opened and closed with respect to the receiving chamber 2614 such that the water-absorbing member 28 can be easily replaced by a cabin crew member.

In the present embodiment, the upper bottom plate 2610 is provided to be divided among each of a plurality of adjacent sets of receiving chambers 2614 so as to be opened and closed. When each of the upper bottom plates 2610 is opened, all of the plurality of water-absorbing members 28 and the entire region of the plurality of receiving chambers 2614 concealed by each of the upper bottom plates 2610 are exposed such that the water-absorbing members 28 can be replaced even more easily.

Specifically, when viewed in a plan view, four elongated upper bottom plates 2610A, 2610B, 2610C, 2610D extending linearly in parallel to the side wall 1208 of the structural frame 12 on the side where the sink 18 is provided are arranged in a direction toward and away from the side wall 1208.

An open/close operation unit 34 is provided on a longitudinal end portion of the four upper bottom plates 2610A, 2610B, 2610C, 2610D so that the four upper bottom plates 2610A, 2610B, 2610C, 2610D are opened and closed smoothly.

In the present embodiment, the open/close operation unit 34 is formed as a missing portion on which to hook a finger, but various known structures can be used for the structure of the open/close operation unit 34, such as forming a ring-shaped handle.

In addition, in the present embodiment, the open/close operation unit 34 is provided on the edge of each of the four upper bottom plates 2610A, 2610B, 2610C, 2610D close to the entrance 1212, and is disposed in an inconspicuous section to ensure the aesthetic appearance of the lavatory 14. However, the section where the open/close operation unit 34 is provided is not limited to the longitudinal end portion of the upper bottom plate 2610.

Note that, for example, the longitudinal end portion of each upper bottom plate 2610 close to the rear plate 2606 may be provided so as to swing with respect to the lower bottom plate 2602 and the supporting wall 2612 by way of a hinge. However, in the present embodiment, the upper bottom plates 2610 are provided so as to be detachable in order to simplify the structure.

Next, the effects of the present embodiment will be described.

Because the upper bottom plate 2610 is supported by the supporting wall 2612 and the upper bottom plate 2610 is not recessed by the weight of the user when the user enters the lavatory 14 and stands on the floor 1402, the user does not feel discomfort, and the water-absorbing member 28 does not collapse.

In addition, because the plurality of receiving chambers 2614 and the plurality of water-absorbing members 28 are concealed by the upper bottom plate 2610, the aesthetic appearance of the lavatory 14 is not impaired.

When the user washes his or her hands in the washbowl 1804 of the sink 18, water scatters on the upper surface of the upper bottom plate 2610 of the floor pan 24A.

Alternatively, when a user opens the lid of the toilet bowl 16 and sits on the toilet seat to use the toilet, or raises the toilet seat and uses the toilet while standing, urine spills and scatters on the upper surface of the upper bottom plate 2610 of the floor pan 24A.

Alternatively, when a user opens the lid of the toilet bowl 16 and washes his or her feet on the toilet seat as a cleansing ritual of washing a part of the body before performing a religious service, water scatters on the upper surface of the upper bottom plate 2610 of the floor pan 24A.

Furthermore, water and urine (hereinafter simply referred to as "water") scattering on the water guiding inner portion 32 in the upper surface of the upper bottom plate 2610 is guided from the upper surface of the upper bottom plate 2610 toward the water guiding inner portions 32 and flows from the receiving chamber 2614 toward the water-absorbing member 28 and is absorbed by the water-absorbing member 28 because the inside of each water guiding inner portion 32 is positioned in a lower section than the upper surface of the upper bottom plate 2610.

Furthermore, when the water scattering on a section of the upper surface of the upper bottom plate 2610 between adjacent sets of water guiding inner portions 32 joins together to form a puddle of water having a certain volume to reach the water guiding inner portions 32, the water is guided from the upper surface of the upper bottom plate 2610 toward the water guiding inner portions 32 and flows from the receiving chamber 2614 toward the water-absorbing member 28 and is absorbed by the water-absorbing member 28 because the inside of each water guiding inner portion 32 is positioned in a lower section than the upper surface of the upper bottom plate 2610.

Therefore, since a greater part of the water scattering on the upper surface of the upper bottom plate 2610 of the floor pan 24A is absorbed by the water-absorbing member 28 via the water guiding inner portions 32, the amount of water remaining on the upper surface of the upper bottom plate 2610 of the floor pan 24A is small, and the water evaporates from the upper surface of the upper bottom plate 2610 in a short period of time.

Therefore, even if the upper surface of the upper bottom plate 2610 gets wet with scattered water due to hand washing or the like, the wet state disappears in a short period of time, which is advantageous in maintaining the lavatory 14 in a hygienically and aesthetically preferable state.

In addition, the frequency at which a cabin crew member needs to wipe up the water on the floor 1402 of the lavatory 14 using a paper towel or the like is reduced, which is advantageous in simplifying cleaning work.

In addition, when replacing the water-absorbing member 28 that has absorbed water, a simple operation of hooking a finger onto the open/close operation unit 34 to open the upper bottom plate 2610, or detach the upper bottom plate 2610 and then grasping and removing the water-absorbing member 28 from the receiving chamber 2614 and inserting a new water-absorbing member 28 into the receiving chamber 2614 is sufficient, which is advantageous in simplifying the maintenance operation of the lavatory 14.

In the present embodiment, because the plurality of receiving chambers 2614 has an elongated shape, it is possible to reduce the number of water-absorbing members 28 by forming the water-absorbing member 28 into an elongated shape, which is advantageous for easily replacing the water-absorbing member 28.

In addition, although the upper bottom plate 2610 may be constituted by one upper bottom plate, the upper bottom plate 2610 is divided into a plurality of upper bottom plates in the present embodiment such that a plurality of water-absorbing members 28 can be replaced whenever one upper bottom plate 2610 is opened, which is advantageous in simplifying the maintenance operation of the lavatory 14.

In addition, when one upper bottom plate 2610 is opened, it is possible to perform a precise operation such as replacing only a water-absorbing member 28 that has absorbed water to the limit of its water absorbing capacity and leaving a water-absorbing member 28 having remaining water absorbing capacity, which is advantageous in reducing the number of water-absorbing members 28 to be discarded and reducing costs.

In addition, when one upper bottom plate 2610 is opened and the plurality of water-absorbing members 28 that are exposed all have water absorbing capacity, the upper bottom plate 2610 may be closed without replacing any water-absorbing member 28, which is advantageous in simplifying the maintenance operation of the lavatory 14.

In addition, in the present embodiment, the four elongated upper bottom plates 2610A, 2610B, 2610C, 2610D extending linearly in parallel to the side wall 1208 of the structural frame 12 are provided so as to be arranged in a direction toward or away from the side wall 1208. Thus, it is conceivable that the water scattering from the sink 18 falls more frequently onto the two upper bottom plates 2610C, 2610D located close to the sink 18 and the water scattering from the sink 18 falls less frequently onto the two upper bottom plates 2610A, 2610B located away from the sink 18.

Thus, an operation in which a cabin crew member opens the two upper bottom plates 2610C, 2010D located close to the sink 18 to replace the water-absorbing member 28, and opens and closes the two upper bottom plates 2610A, 2610B located away from the sink 18 to check the water absorbing capacity of the water-absorbing member 28 is sufficient, which is advantageous in simplifying the maintenance operation of the lavatory 14.

In other words, predicting the section where scattered water falls more frequently and the section where scattered water falls less frequently is advantageous in simplifying the maintenance operation of the lavatory 14.

Furthermore, when the upper surface of the upper bottom plate 2610 of the floor pan 24A is formed as a hydrophobic surface having hydrophobicity so that water is easily repelled, water scattering on the upper surface of the upper bottom plate 2610 is repelled by the hydrophobic surface of the upper surface and is easily guided to the water guiding inner portions 32.

Furthermore, when the surface of each water guiding inner portion 32 is formed as a hydrophilic surface having hydrophilicity so as to easily get wet with water, the water guided from the upper surface of the upper bottom plate 2610 to the water guiding inner portions 32 easily spreads along the water guiding inner portions 32 and is more easily guided from the water guiding inner portions 32 to the receiving chamber 2614.

When the upper surface of the upper bottom plate 2610 is a hydrophobic surface and the surface of the water guiding inner portion 32 is a hydrophilic surface, water scattering on the upper surface of the upper bottom plate 2610 is efficiently absorbed by the water-absorbing member 28 via the water guiding inner portions 32, and the amount of water remaining on the upper surface of the upper bottom plate 2610 of the floor pan 24A is reduced. Thus, this configuration is more advantageous in causing the water to evaporate from the upper surface of the upper bottom plate 2610 in a shorter period of time.

### Second Embodiment

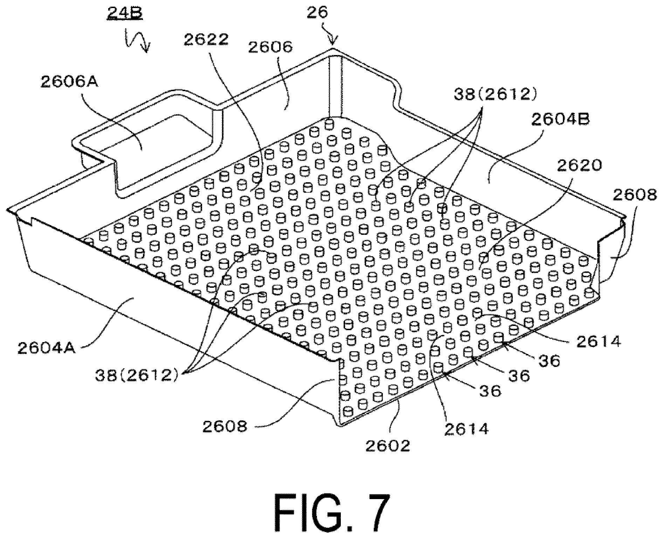

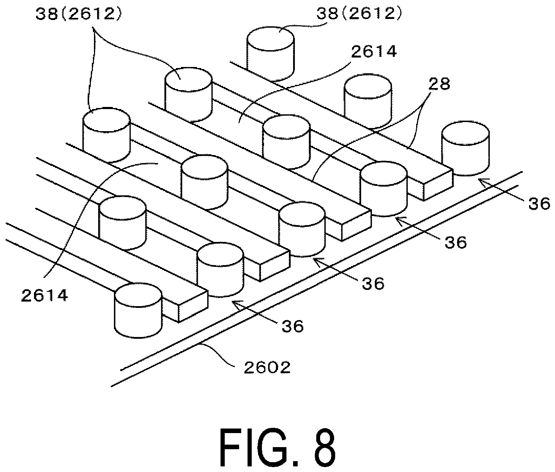

Next, a second embodiment will be described with reference to FIGS. 7 and 8.

Note that in the following description of the embodiment, the same sections and members as those in the first embodiment will be designated by the same reference signs, descriptions thereof will be omitted, and different sections will be mainly described.

In a floor pan 24B of the second embodiment, the structure of the supporting wall 2612 is different from that of the first embodiment.

In other words, in the second embodiment, the supporting wall 2612 is formed as a plurality of projections 38 that forms rows 36 provided at intervals on the lower bottom plate 2602 so as to project and extend in parallel.

The plurality of protrusions 38 each have the same shape and size and have a circular cross-section, but the cross-section is not limited to a circular shape, and various known shapes can be employed.

Furthermore, the plurality of receiving chambers 2614 are formed into an elongated shape between adjacent sets of rows 36, and the water-absorbing members 28 are formed into an elongated shape so as to be removably received in each of the elongated receiving chambers 2614. Note that the lengths of the row 36, the receiving chamber 2614, and the water-absorbing member 28 at the end portion of the large-width portion 2622 are formed shorter than those in other sections.

When viewed in a plan view, the rows 3612 extend linearly in parallel to the side wall 1208 at intervals in a direction toward or away from the side wall 1208 of the structural frame 12 on the side where the sink 18 is provided.

Note that the cross-sectional shape of each protruding portion 38 and the interval between adjacent sets of rows 36 are dimensioned to allow the upper bottom plate 2610 to be supported without deforming when the upper bottom plate 2610 is placed on the projection portions 38 and a user stands on the upper bottom plate 2610.

The same effects as those of the first embodiment are also exhibited by the second embodiment.

### Third Embodiment

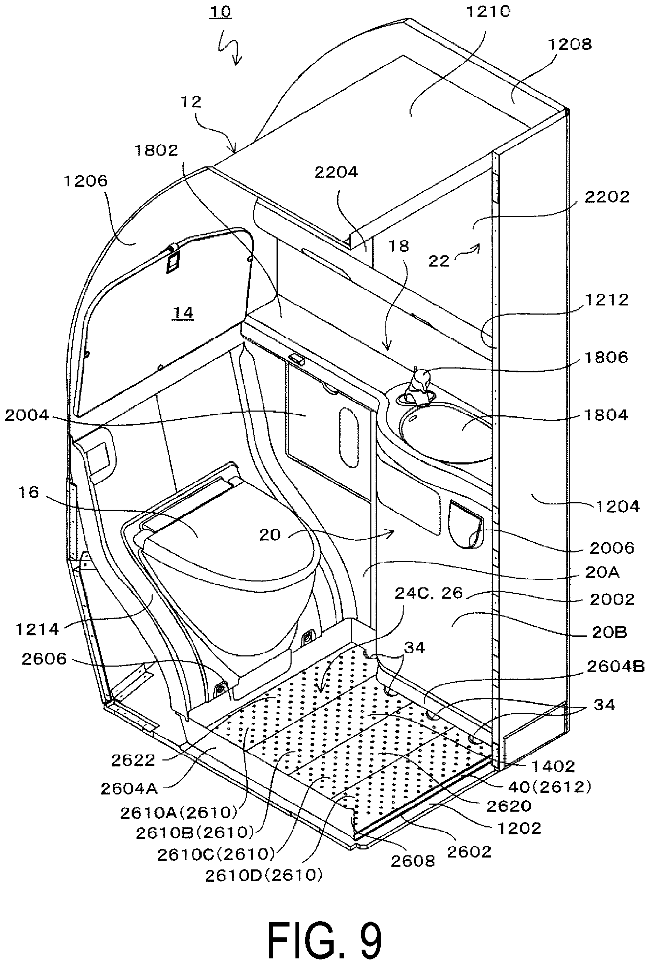

Next, a third embodiment will be described with reference to FIGS. 9 to 11.

In a floor pan 24C of the third embodiment, the structure of the supporting wall 2612 is different from that of the first embodiment, similar to the second embodiment.

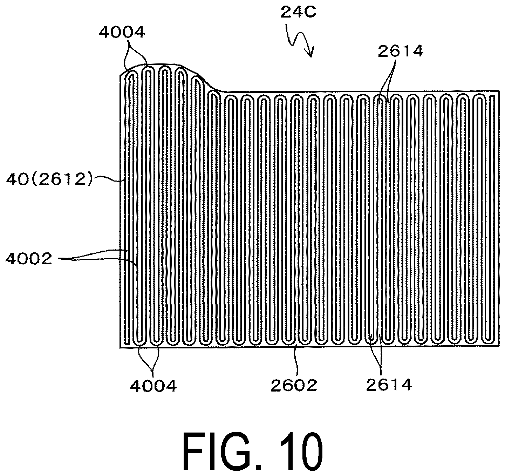

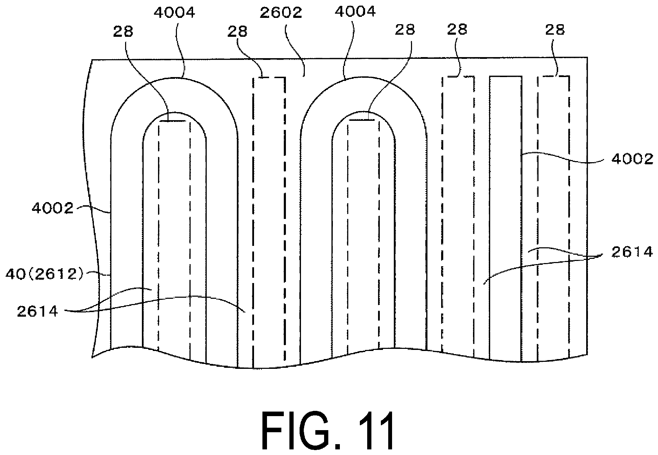

As illustrated in FIGS. 10 and 11, the supporting wall 2612 is formed of a single protrusion portion 40 that is formed to extend on the lower bottom plate 2602.

The single protrusion portion 40 includes linear portions 4002 that are parallel to each other and connection portions 4004 that connect the end portions of the linear portions 4002.

When viewed in a plan view, the linear portions 4002 extend linearly in parallel to the rear plate 2606 at intervals in a direction toward or away from the rear plate 2606 on the side where the toilet bowl 16 is positioned.

As illustrated in FIGS. 10 and 11, the plurality of receiving chambers 2614 are formed into an elongated shape between adjacent sets of linear portions 4002 on the lower bottom plate 2602, and the plurality of water-absorbing members 28 are formed into an elongated shape so as to be removably received in each of the elongated receiving chambers 2614.

Accordingly, the plurality of receiving chambers 2614 and the plurality of water-absorbing members 28 also extend linearly in parallel to the rear plate 2606 at intervals in a direction toward or away from the rear plate 2606.

As illustrated in FIG. 9, the upper bottom plate 2610 is provided to be divided between a plurality of adjacent sets of receiving chambers 2614 so as to be opened and closed. When each of the upper bottom plates 2610 is opened, all of the plurality of water-absorbing members 28 and the entire region of the plurality of receiving chambers concealed by each of the upper bottom plates 2610 are exposed and each water-absorbing member 28 can be replaced more easily.

Specifically, when viewed in a plan view, four elongated upper bottom plates 2610A, 2610B, 2610C, 2610D extending linearly in parallel to the rear plate 2606 are arranged in a direction toward and away from the rear plate 2606.

The open/close operation unit 34 is provided on a longitudinal end portion of the four upper bottom plates 2610A, 2610B, 2610C, 2610D so that the four upper bottom plates 2610A, 2610B, 2610C, 2610D are opened and closed smoothly. In the present embodiment, a missing portion on which to hook a finger is provided as the open/close operation unit 34 at an edge close to the sink 18, of each of the four upper bottom plates 2610A, 2610B, 2610C, 2610D.

The same effects as the first embodiment are also exhibited by the third embodiment.

That is, even if the user enters the lavatory 14 and stands on the floor 1402, because the upper bottom plate 2610 is supported by the supporting wall 2612 and the upper bottom plate 2610 is not recessed by the weight of the user, the user does not feel discomfort and the water-absorbing member 28 does not collapse.

In addition, because the plurality of receiving chambers 2614 and the plurality of water-absorbing members 28 are concealed by the upper bottom plate 2610, the aesthetic appearance of the lavatory 14 is not impaired.

Furthermore, when a user opens the lid of the toilet bowl 16 and washes his or her feet on the toilet seat and water scatters on the upper surface of the upper bottom plate 2610 of the floor pan 24A, because the majority of the water scattering on the water guiding inner portion 32 in the upper surface of the upper bottom plate 2610 is absorbed by the water-absorbing member 28 via the water guiding inner portion 32 similarly to the first embodiment, the amount of water remaining on the upper surface of the upper bottom plate 2610 of the floor pan 24A is small, and the water evaporates from the upper surface of the upper bottom plate 2610 in a short period of time.

Therefore, even if the upper surface of the upper bottom plate 2610 gets wet with scattered water, the wet state disappears in a short period of time, and this is advantageous in maintaining the lavatory 14 in a hygienically and aesthetically preferable state.

In addition, the frequency at which a cabin crew member needs to wipe up water on the floor 1402 of the lavatory 14 using a paper towel or the like is reduced, which is advantageous in simplifying cleaning work.

In addition, when replacing the water-absorbing member 28 that has absorbed water, a simple operation of hooking a finger onto the open/close operation unit 34 to open the upper bottom plate 2610, or detach the upper bottom plate 2610, and then grasping and removing the water-absorbing member 28 from the receiving chamber 2614 and inserting a new water-absorbing member 28 into the receiving chamber 2614 is sufficient, which is advantageous in simplifying the maintenance operation of the lavatory 14.

In addition, because the upper bottom plate 2610 is divided into a plurality of upper bottom plates, a plurality of water-absorbing members 28 can be replaced whenever one upper bottom plate 2610 is opened, which is advantageous in simplifying the maintenance operation of the lavatory 14. Moreover, when one upper bottom plate 2610 is opened, it is possible to perform a precise operation of replacing only a water-absorbing member 28 that has absorbed water to its water absorbing capacity and leaving a water-absorbing member 28 having remaining water absorbing capacity, which is advantageous in reducing the number of water-absorbing members 28 to be discarded and reducing costs.

In addition, when one upper bottom plate 2610 is opened and the plurality of water-absorbing members 28 that are exposed all have water absorbing capacity, the upper bottom plate 2610 may be closed without replacing any water-absorbing member 28, which is advantageous in simplifying the maintenance operation of the lavatory 14.

In addition, in the present embodiment, the four elongated upper bottom plates 2610A, 2610B, 2610C, 2610D extending linearly in parallel to the rear plate 2606 are provided so as to be arranged in a direction toward or away from the rear plate 2606. Thus, it is conceivable that water scattering from the toilet bowl 16 falls more frequently onto the two upper bottom plates 2610A, 2610B located close to the toilet bowl 16 and that water scattering from the toilet bowl 16 falls less frequently onto the two upper bottom plates 2610C, 2610D located away from the toilet bowl 16.

Thus, an operation in which a cabin crew member opens the two upper bottom plates 2610A, 2010B located close to the toilet bowl 16 to replace the water-absorbing member 28, and opens and closes the two upper bottom plates 2610C, 2610D located away from the toilet bowl 16 to check the water-absorbing capacity of the water-absorbing member 28 is sufficient, which is advantageous in simplifying the maintenance operation of the lavatory 14.

In other words, predicting the section where scattered water falls more frequently and the section where scattered water falls less frequently is advantageous in simplifying the maintenance operation of the lavatory 14.

### Fourth Embodiment

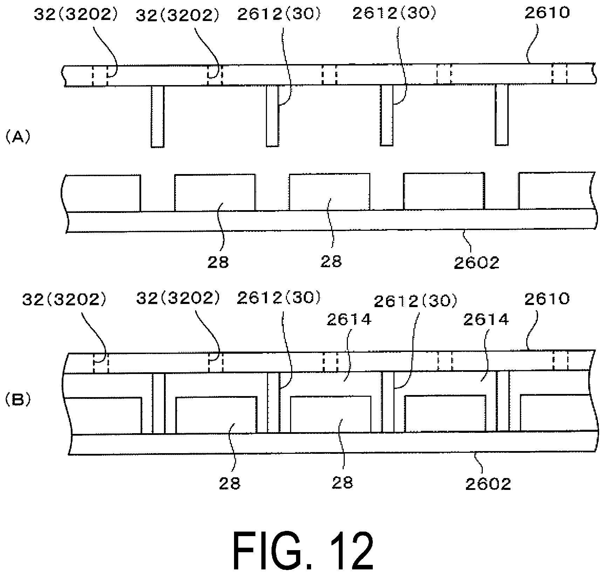

Next, a fourth embodiment will be described with reference to FIG. 12.

The fourth embodiment is a modified example of the first embodiment. In the first embodiment, the supporting wall 2612 is provided on the upper surface of the lower bottom plate 2602. The fourth embodiment is different from the first embodiment in that the supporting wall 2612 is provided on a lower surface of the upper bottom plate 2610 as illustrated in FIG. 12(A).

That is, in the fourth embodiment, the supporting walls 2612 are formed as the plurality of protrusion portions 30 that are provided at intervals from each other on the lower surface of the upper bottom plate 2610 so as to project and extend in parallel to each other, and the upper surface of the lower bottom plate 2602 is formed as a flat surface.

As illustrated in FIG. 12(B), in a state in which the lower edge of the supporting wall 2612 is placed on the lower bottom plate 2602 on which the plurality of water-absorbing members 28 are arranged and the upper bottom plate 2610 is located above the lower bottom plate 2602, the plurality of receiving chambers 2614 are formed in an elongated shape and extend linearly between adjacent sets of protrusion portions 30, and the plurality of water=absorbing members 28 are disposed so as to be removably received in the elongated receiving chambers 2614.

Note that the upper bottom plate 2610 may be constituted by a single upper bottom plate similarly to the first embodiment or may be divided into a plurality of upper bottom plates for respective receiving chambers.

In addition, replacing the water-absorbing member 28 is achieved by hooking a finger onto the open/close operation unit 34 to open or detach the upper bottom plate 2610, grasping and removing the water-absorbing member 28, and placing a new water-absorbing member 28 on the upper surface of the lower bottom plate 2602 corresponding to the receiving chamber 2614.

The same effects as the first embodiment are also exhibited by the fourth embodiment, and the configuration in which the supporting wall 2612 is provided on the upper bottom plate 2610 as in the fourth embodiment can also be applied to the first to third embodiments.

### Fifth Embodiment

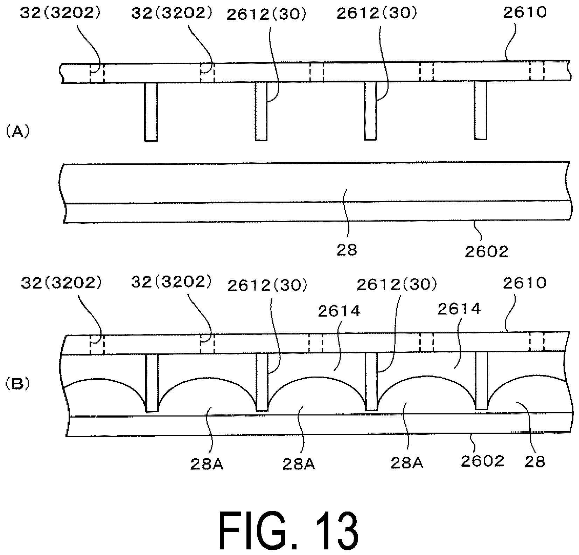

Next, a fifth embodiment will be described with reference to FIG. 13.

The fifth embodiment is a modified example of the fourth embodiment. In the fourth embodiment, a plurality of water-absorbing members 28 are used. The fifth embodiment is different from the second embodiment in that a single water-absorbing member 28 is used.

In the fifth embodiment, as illustrated in FIG. 13(A), a single water-absorbing member 28 having a size corresponding to the upper surface of the lower bottom plate 2602 is placed on the lower bottom plate 2602. Further, as illustrated in FIG. 13(B), the upper bottom plate 2610 including the supporting wall 2612 is placed on the water-absorbing member 28, and a portion of the water-absorbing member 28 is crushed by the supporting wall 2612. In other words, in a state in which the lower edge of the supporting wall 2612 is placed on the lower bottom plate 2602 with the water-absorbing member 28 disposed therebetween, and the upper bottom plate 2610 is positioned above the lower bottom plate 2602, the receiving chambers 2614 are formed in an elongated shape so as to extend linearly between adjacent sets of protrusion portions 30, and a portion 28A of the water-absorbing member 28 is received in each of the receiving chambers 2614.

Moreover, replacing the water-absorbing member 28 is achieved by opening or detaching the upper bottom plate 2610, grasping and removing the water-absorbing member 28, and placing a new water-absorbing member 28 on the lower bottom plate 2602.

The same effects as the first embodiment are also exhibited by the fifth embodiment, and the configuration of using a single water-absorbing member 28 according to the fifth embodiment can also be applied to the first to fourth embodiments.

### Reference Signs List

10 Aircraft lavatory unit
12 Structural frame
1202 Bottom wall
1206 Rear wall
1208 Pair of side walls
14 Lavatory
1402 Floor
16 Toilet bowl
18 Sink
24A, 24B, 24C Floor pan
2602 Lower bottom plate
2610 Upper bottom plate
2610A, 2610B, 2610C, 2610D Upper bottom plate
2612 Supporting wall
2614 Receiving chamber
28 Water-absorbing member
30 Protrusion portion
32 Water guiding inner portion
36 Row
38 Projection portion
40 Single protrusion portion
4002 Linear portion
4004 Connection portion

## Claims

1. A floor structure for an aircraft lavatory unit, comprising a floor pan disposed on a bottom wall of a structural frame of the aircraft lavatory unit to form a floor of a lavatory, the floor pan comprising:
a lower bottom plate placed on the bottom wall;
an upper bottom plate located above the lower bottom plate, the upper bottom plate configured to form the floor of the lavatory;
a supporting wall projecting from at least one of the lower bottom plate and the upper bottom plate, the supporting wall configured to support the upper bottom plate on the lower bottom plate; and
a plurality of receiving chambers formed on the lower bottom plate by the supporting wall, the plurality of receiving chambers configured to be opened and closed by the upper bottom plate,
a water-absorbing member being provided so as to be removably received in each of the plurality of receiving chambers, and
a water guiding inner portion being provided in the upper bottom plate so as to guide water scattering on the upper bottom plate toward the plurality of receiving chambers.

2. The floor structure for an aircraft lavatory unit according to claim 1, wherein the plurality of receiving chambers have an elongated shape and are arranged so that longitudinal directions thereof are parallel to each other.

3. The floor structure for an aircraft lavatory unit according to claim 2,
wherein the supporting wall is formed as a plurality of protrusion portions provided at intervals on the lower bottom plate or the upper bottom plate so as to project and extend in parallel, and
the plurality of receiving chambers are formed into an elongated shape between adjacent sets of the plurality of protrusion portions.

4. The floor structure for an aircraft lavatory unit according to claim 2,
wherein the supporting wall is formed as a plurality of projection portions comprising rows provided at intervals on the lower bottom plate or the upper bottom plate so as to project and extend in parallel, and
the plurality of receiving chambers are formed into an elongated shape between adjacent sets of the rows.

5. The floor structure for an aircraft lavatory unit according to claim 2,
wherein the supporting wall is formed as a single protrusion portion formed so as to extend on the lower bottom plate or the upper bottom plate,
the single protrusion portion includes linear portions parallel to each other and connection portions configured to connect end portions of the linear portions, and
the plurality of receiving chambers are formed into an elongated shape between adjacent sets of the linear portions.

6. The floor structure for an aircraft lavatory unit according to any one of claims 2 to 5,
wherein the structural frame comprises a plurality of wall plates rising from the bottom wall,
a sink is disposed against a first wall plate of the plurality of wall plates and a toilet bowl is disposed against an intermediate portion in a width direction of a second wall plate of the plurality of wall plates, and
when viewed in a plan view, the plurality of receiving chambers are arranged at intervals in a direction toward and away from the first wall plate on which the sink is disposed so as to extend linearly in parallel to the first wall plate on which the sink is disposed, or are arranged at intervals in a direction toward and away from the second wall plate on which the toilet bowl is disposed so as to extend linearly in parallel to the second wall plate on which the toilet bowl is disposed.

7. The floor structure for an aircraft lavatory unit according to claim 6,
wherein a plurality of the upper bottom plates are provided so as to be divided for adjacent sets of the plurality of receiving chambers, and
when viewed in a plan view, the plurality of upper bottom plates have such an elongated shape as to be arranged in a direction toward and away from the first wall plate on which the sink is disposed to extend linearly in parallel to the first wall plate on which the sink is disposed, or have such an elongated shape as to be arranged in a direction toward and away from the second wall plate on which the toilet bowl is disposed to extend linearly in parallel to the second wall plate on which the toilet bowl is disposed.

8. The floor structure for an aircraft lavatory unit according to claim 7, wherein a missing portion on which to hook a finger is provided in an end portion in a longitudinal direction of each of the plurality of upper bottom plates.

9. The floor structure for an aircraft lavatory unit according to any one of claims 1 to 8, wherein a plurality of the water-absorbing members are provided so as to be removably received in the plurality of receiving chambers, respectively.

10. The floor structure for an aircraft lavatory unit according to any one of claims 1 to 8, wherein a single water-absorbing member is provided, and a portion of the water-absorbing member is received in each of the plurality of receiving chambers.

11. The floor structure for an aircraft lavatory unit according to any one of claims 1 to 10, wherein the water-absorbing member contains an antibacterial agent or a fragrance agent.
